# EUROPÄISCHE PATENTSCHRIFT

(11) **EP 3 775 828 B1**
(45) Veröffentlichungstag und Bekanntmachung des Hinweises auf die Patenterteilung: **07.09.2022**
(21) Anmeldenummer: 19711289.9
(22) Anmeldetag: 12.03.2019
(51) Int. Cl.: G01M 13/045

(54) **ZUSTANDSÜBERWACHUNG FÜR GLEITLAGER MITTELS KÖRPERSCHALL**
CONDITION MONITORING FOR PLAIN BEARINGS BY MEANS OF STRUCTURE-BORNE NOISE
SURVEILLANCE DE L'ÉTAT D'UN PALIER LISSE À L'AIDE DU BRUIT SOLIDIEN

(30) Priorität: 11.04.2018 DE 102018205491
(43) Veröffentlichungstag der Anmeldung: 17.02.2021
(73) Patentinhaber: ZF Friedrichshafen AG, 88046 Friedrichshafen (DE)
(72) Erfinder: VATH, Andreas, 63849 Leidersbach (DE); SCHMIDT, Sebastian, 97225 Zellingen (DE)
(86) Internationale Anmeldenummer: PCT/EP2019/056087
(87) Internationale Veröffentlichungsnummer: WO 2019/197096

(56) Entgegenhaltungen:
- US-A1- 2005 284 225
- US-A1- 2016 342 148

## Beschreibung

Die Erfindung betrifft ein Verfahren nach dem Oberbegriff von Anspruch 1 und eine Anordnung nach dem Oberbegriff von Anspruch 7.

Um den Verschleißzustand von Gleitlagern zu erfassen, sind aus dem Stand der Technik Verfahren bekannt, die auf Temperaturmessungen beruhen. Aus einem anormalen Temperaturanstieg wird dabei auf eine Beschädigung des Gleitlagers geschlossen. Eine weitere Möglichkeit der Gleitlagerüberwachung ist die messtechnische Bestimmung des Gleitlagerspalts. Es sind jeweils Sensoren erforderlich, die unmittelbar in das Gleitlager eingebracht werden. Dies ist zum einen aufwendig und teuer und zum anderen problematisch hinsichtlich des zur Verfügung stehenden Bauraums.

Aus dem Stand der Technik sind darüber hinaus Verfahren zur Schadensfrüherkennung für Getriebe bekannt, die eine Auswertung von Körperschall vorsehen. Beispielsweise wird der aus einem Zahneingriff resultierende Körperschall gemessen, um Erkenntnisse über Beschädigungen der Verzahnung zu gewinnen. Derartige Verfahren sind aber nicht für Gleitlager anwendbar, da diese nur wenig Schall emittieren und der emittierte Schall zudem aufgrund der Flüssigreibung im Gleitlager keine Aussagen über den Verschleißzustand erlaubt.

Weiterer Stand der Technik ist aus US 2016/342148 A1, US 2005/284225 A1 und DE 102011006125 A1 bekannt.

Der Erfindung liegt die Aufgabe zugrunde, die Ermittlung des Betriebszustands eines Gleitlagers gegenüber den aus dem Stand der Technik bekannten Lösungen zu verbessern.

Diese Aufgabe wird gelöst durch ein Verfahren nach Anspruch 1 und eine Anordnung nach Anspruch 7.

Bevorzugte Weiterbildungen sind in den Unteransprüchen enthalten.

Das Verfahren dient zur Ermittlung eines Betriebszustands, insbesondere eines Verschleißzustands eines Gleitlagers. Mittels des Gleitlagers ist ein erstes Zahnrad gelagert, das mit einem zweiten Zahnrad kämmt. Das erste Zahnrad kann etwa auf einer Welle fixiert sein, die mittels des Gleitlagers drehbar gelagert ist. Auch ist es möglich, das erste Zahnrad direkt auf dem Gleitlager bzw. einem Außenring des Gleitlagers zu fixieren oder den Außenring des Gleitlagers einstückig in das Zahnrad zu integrieren.

Wenn sich das erste Zahnrad und das zweite Zahnrad drehen und zwischen beiden Zahnrädern ein Drehmoment übertragen wird, entsteht im Zahneingriff, das heißt in den miteinander kämmenden Verzahnungen des ersten Zahnrads und des zweiten Zahnrads Körperschall. Körperschall ist Schall, der sich in einem Körper ausbreitet. Vorliegend breitet sich der Körperschall in dem ersten Zahnrad und dem zweiten Zahnrad aus und wird auf umliegende Getriebeteile übertragen und kann dort mittels eines Sensors gemessen werden. Insbesondere ist es möglich, den Körperschall an einem Getriebegehäuse zu messen.

Zur Messung des Körperschalls eignen sich unterschiedlichen Sensoren zur Schwingungserfassung, wie z.B. Körperschallsensoren, Beschleunigungssensoren, MEMS oder auch durch die Schock-Puls-Methode.

Erfindungsgemäß wird einem Signal des Sensors eine Größe zugeordnet, die mit dem Betriebszustand des Gleitlagers korreliert. Dies bedeutet, dass der Betriebszustand des Gleitlagers anhand des mittels des Sensors gemessenen Körperschalls aus dem Zahneingriff des ersten Zahnrads und des zweiten Zahnrads beurteilt wird. Möglich ist das, weil sich mit fortschreitendem Verschleiß des Gleitlagers dessen Lagerspalt vergrößert. Dadurch kommt es zu einer Verlagerung, das heißt einer Änderung der Position des ersten Zahnrads relativ zu dem zweiten Zahnrad. Durch die Verlagerung des ersten Zahnrads ändert sich die Anatomie des Zahneingriffs und damit einhergehend der aus dem Zahneingriff resultierende Körperschall.

Bei der Größe, die dem Signal des Sensors zugeordnet wird, kann es sich um einen physikalischen Parameter handeln, der den Zustand des Gleitlagers charakterisiert. So ist es etwa möglich, als Größe das absolute oder relative Lagerspiel des Gleitlagers zu wählen. Auch ist es möglich, dem Signal des Sensors eine Bewertung zuzuordnen. Die Bewertung kann quantitativ erfolgen, indem dem Signal eine Maßzahl zugeordnet wird, oder qualitativ. Bei einer qualitativen Bewertung wird das Signal des Sensors in eine von mehreren Kategorien eingeteilt. Eine Benennung der Kategorien stellt dabei die Größe dar. So kann das Signal etwa in die zwei Kategorien "in Ordnung" und "nicht in Ordnung" eingeteilt werden. Ist aufgrund des Signals des Sensors davon auszugehen, dass das Gleitlager seine Verschleißgrenze noch nicht erreicht hat, so gilt es als "in Ordnung". Als "nicht in Ordnung" gilt es entsprechend, wenn davon auszugehen ist, dass das Gleitlager seine Verschleißgrenze überschritten hat. Die Ermittlung des Betriebszustands des Gleitlagers mittels eines Sensors, der Körperschall misst, gestaltet sich vergleichsweise einfach, da der Sensor außerhalb des Gleitlagers, etwa in einem Getriebegehäuse angeordnet werden kann. Zudem kann auf allgemein verfügbare Standardsensoren zurückgegriffen werden. Es ist nicht erforderlich, Sensoren zum Einbau in das Gleitlager speziell anzufertigen.

In dem gemessenen Signal des Sensors ist gewöhnlich nicht nur der Körperschall aus dem Zahneingriff des ersten Zahnrads und des zweiten Zahnrads enthalten, sondern auch Körperschall, der von anderen Getriebeteilen erzeugt wird. Diese Störsignale werden erfindungsgemäß aus dem gemessenen Signal herausgefiltert, sodass das gefilterte Signal einem Signal des Körperschalls aus dem Zahneingriff entspricht. Das gefilterte Signal enthält die Signalbestandteile, die den Körperschall repräsentieren, der durch die miteinander kämmenden Verzahnungen des ersten Zahnrads und des zweiten Zahnrads hervorgerufen wird. Durch die Filterung des Signals vereinfacht sich die Bewertung des Betriebszustands des Gleitlagers.

Bestimmte Betriebszustände des Gleitlagers gehen einher mit einem charakteristischen Frequenz- und/oder Ordnungsspektrum des aus dem Zahneingriff des ersten Zahnrads und des zweiten Zahnrads resultierenden Körperschalls. Zur Zuordnung der Größe, die mit dem Betriebszustand des Gleitlagers korreliert, wird daher in einer bevorzugten Weiterbildung ein Frequenz- und/oder ein Ordnungsspektrum des gefilterten Signals berechnet. Insbesondere kann ein Hüllkurvenspektrum, ein Cepstrum und/oder eine Curtosis berechnet werden.

Der Körperschall aus dem Zahneingriff des ersten Zahnrads und des zweiten Zahnrads ist nicht nur abhängig von dem Betriebszustand des Gleitlagers, sondern auch von einer Drehzahl des ersten Zahnrads und des zweiten Zahnrads, einer Temperatur des Gleitlagers sowie einem Drehmoment, mit dem die Zahnräder beaufschlagt werden. In einer bevorzugten Weiterbildung werden daher eine oder mehrere dieser Größen erfasst und in die Zuordnung der Größe zu dem gemessenen Signal des Sensors einbezogen.

Die Größe, die mit dem Betriebszustand des Gleitlagers korreliert, lässt sich dem Signal des Sensors zuordnen, indem das Signal mit Referenzsignalen verglichen wird, die zuvor an Gleitlagern mit bekanntem Betriebszustand gemessen wurden. Stimmt das Signal mit einem solchen Referenzsignal überein, wird dem Signal die Größe zugeordnet, die dem Betriebszustand des Gleitlagers entspricht, an dem das übereinstimmende Referenzsignal gemessen wurde.

Alternativ lässt sich die Zuordnung modellbasiert vornehmen. In einer bevorzugten Weiterbildung wird entsprechend unter Verwendung eines Modells des ersten Zahnrads, des zweiten Zahnrads und des Gleitlagers das gefilterte Signal und/oder das Frequenz- und/oder das Ordnungsspektrum des gefilterten Signals durch Simulation ermittelt. Bei dem verwendeten Modell kann es sich um ein physikalisches bzw. analytisches Modell und/oder ein durch maschinenlernen trainiertes künstliches neuronales Netz (KNN) handeln. Das Modell ist in der Lage, den Betriebszustand des simulierten Gleitlagers abzubilden. Durch Abgleich des gemessenen Signals mit der Simulation lässt sich auf einen Betriebszustand des untersuchten Gleitlagers schließen.

Bevorzugt ist das Verfahren so weitergebildet, dass die Simulation iterativ über mehrere Betriebszustände des simulierten Gleitlagers durchgeführt wird. In jeder Iteration wird dabei ein Modell mit einem Gleitlager verwendet, das einen abweichenden Betriebszustand aufweist. So lassen sich Simulationsergebnisse für verschiedene Betriebszustände gewinnen und mit dem untersuchten Gleitlager bzw. mit dem gemessenen Signal des Sensors abgleichen.

In einer darüber hinaus bevorzugten Weiterbildung werden entsprechend die durch Simulation ermittelten Größen jeweils mit einer entsprechenden durch Messen ermittelten Größe verglichen.

Eine erfindungsgemäße Anordnung weist ein Gleitlager, ein erstes Zahnrad, ein zweites Zahnrad, einen Sensor und eine Auswerteeinheit auf. Das erste Zahnrad ist mittels des Gleitlagers und gegebenenfalls mindestens eines weiteren Gleitlagers gelagert und kämmt mit dem zweiten Zahnrad. Der Sensor ist ausgebildet, Körperschall aus einem Zahneingriff des ersten Zahnrads und des zweiten Zahnrads bzw. einer Verzahnung des ersten Zahnrads und einer Verzahnung des zweiten Zahnrads zu messen. Erfindungsgemäß implementiert die Auswerteeinheit das erfindungsgemäße Verfahren oder eine bevorzugte Weiterbildung, das heißt die Auswerteeinheit ist ausgebildet, ein solches Verfahren auszuführen.

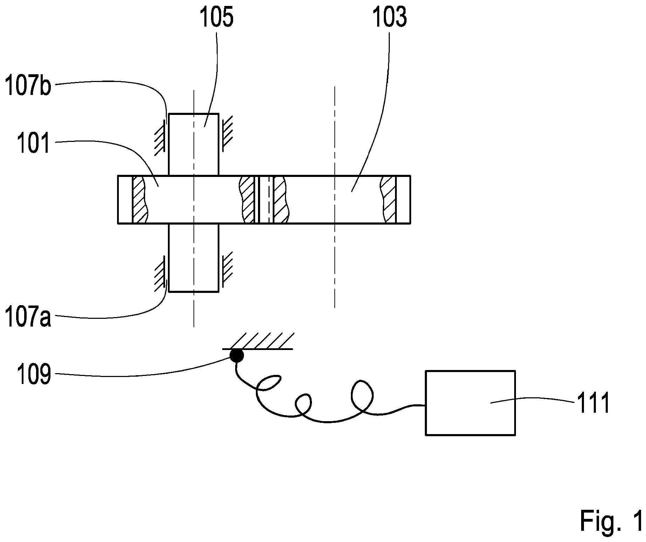

Ein bevorzugtes Ausführungsbeispiel der Erfindung ist in Fig. 1 dargestellt. Im Einzelnen zeigt:
Fig. 1 eine Zahnradanordnung.

Ein erstes Zahnrad 101 und ein zweites Zahnrad 103 der in Fig. 1 dargestellten Anordnung kämmen miteinander. Das erste Zahnrad 101 ist auf einer Welle 105 fixiert, die mittels eines ersten Gleitlagers 107a und eines zweiten Gleitlagers 107b drehbar gelagert ist.

Infolge von Verschleiß des ersten Gleitlagers 107a und zweiten Gleitlagers 107b entsteht erhöhtes Lagerspiel. Dadurch vergrößert sich die radiale Beweglichkeit der Welle 105 und des ersten Zahnrads 101. Bei Belastung vergrößert sich infolgedessen ein Achsabstand des ersten Zahnrads 101 und des zweiten Zahnrads 103. Dies beeinflusst den Zahneingriff des ersten Zahnrads 101 und des zweiten Zahnrads 103 und verursacht eine Änderung der Geräuschemissionen.

Die Geräuschemissionen werden mittels eines Sensors 109 gemessen und in einem Steuergerät 111 ausgewertet. Die gemessenen Geräuschemissionen dienen dem Steuergerät 111 als Indikator für den Verschleißzustand des ersten Gleitlagers 107a und des zweiten Gleitlagers 107b. Eine Änderung der Geräuschemissionen, die einem bestimmten Muster folgt, das sich etwa durch Referenzmessungen bestimmen lässt, deutet auf Verschleiß in den Lagern 107a, 107b hin.

### Bezugszeichen

- 101: erstes Zahnrad
- 103: zweites Zahnrad
- 105: Welle
- 107a: erstes Gleitlager
- 107b: zweites Gleitlager
- 109: Sensor
- 111: Steuergerät

## Patentansprüche

1. Verfahren zur Ermittlung eines Betriebszustands mindestens eines Gleitlagers (107a, 107b); wobei
ein erstes Zahnrad (101) mittels des Gleitlagers (107a, 107b) drehbar gelagert ist und mit einem zweiten Zahnrad (103) kämmt; und wobei
mittels eines Sensors (109) Körperschall aus einem Zahneingriff des ersten Zahnrads (101) und des zweiten Zahnrads (103) gemessen wird; wobei
der Betriebszustand des Gleitlagers (107a, 107b) anhand des mittels des Sensors (109) gemessenen Körperschalls aus dem Zahneingriff des ersten Zahnrads (101) und des zweiten Zahnrads (103) beurteilt wird,
**dadurch gekennzeichnet, dass**
das Signal gefiltert wird; wobei
das gefilterte Signal einem Signal des Körperschalls aus dem Zahneingriff entspricht.

2. Verfahren nach Anspruch 1,
**dadurch gekennzeichnet,**
**dass**
ein Frequenz- und/oder ein Ordnungsspektrum des gefilterten Signals berechnet wird.

3. Verfahren nach einem der vorhergehenden Ansprüche; **dadurch gekennzeichnet, dass**
eine Drehzahl des ersten Zahnrads (101) und/oder eine Temperatur des Gleitlagers (107a, 107b) und/oder ein Drehmoment, mit dem das erste Zahnrad (101) beaufschlagt ist, erfasst wird.

4. Verfahren nach einem der vorhergehenden Ansprüche; **dadurch gekennzeichnet, dass**
unter Verwendung eines Modells des ersten Zahnrads (101), des zweiten Zahnrads (103) und des Gleitlagers (107a, 107b) das gefilterte Signal und/oder das Frequenz- und/oder das
Ordnungsspektrum des gefilterten Signals durch Simulation ermittelt wird; wobei
das Modell den Betriebszustand des Gleitlagers (107a, 107b) abbildet.

5. Verfahren nach dem vorhergehenden Anspruch; **dadurch gekennzeichnet, dass** das die Simulation iterativ über mehrere Betriebszustände des Gleitlagers (107a, 107b) durchgeführt wird.

6. Verfahren nach Anspruch 4 oder 5; **dadurch gekennzeichnet, dass**
die durch Simulation ermittelten Größen jeweils mit einer entsprechenden durch Messen ermittelten Größe verglichen werden.

7. Anordnung mit mindestens einem Gleitlager (107a, 107b), einem ersten Zahnrad (101), einem zweiten Zahnrad (103), einem Sensor (109) und einer Auswerteinheit (111); wobei
das erste Zahnrad (101) mittels des Gleitlagers (107a, 107b) gelagert ist und mit dem zweiten Zahnrad (103) kämmt; und wobei
einen Sensor (109), der ausgebildet ist, Körperschall aus einem Zahneingriff des ersten Zahnrads (101) und des zweiten Zahnrads (103) zu messen; **dadurch gekennzeichnet, dass** die Auswerteinheit (111) ausgebildet ist, ein Verfahren nach einem der vorhergehenden Ansprüche auszuführen.

## Claims

1. Method for determining an operating state of at least one plain bearing (107a, 107b), wherein:
a first gear (101) is rotatably mounted by means of the plain bearing (107a, 107b) and meshes with a second gear (103); and wherein
structure-borne sound from a tooth engagement of the first gear (101) and the second gear (103) is measured by means of a sensor (109); wherein
the operating state of the plain bearing (107a, 107b) is assessed on the basis of the structure-borne sound from the tooth engagement of the first gear (101) and the second gear (103) measured by means of the sensor (109),
**characterized in that**
the signal is filtered; wherein
the filtered signal corresponds to a signal of the structure-borne sound from the tooth engagement.

2. Method according to Claim 1, **characterized in that** a frequency spectrum and/or an order spectrum of the filtered signal is calculated.

3. Method according to one of the preceding claims; **characterized in that**
a rotational speed of the first gear (101) and/or a temperature of the plain bearing (107a, 107b) and/or a torque to which the first gear (101) is subjected is detected.

4. Method according to one of the preceding claims; **characterized in that**
by using a model of the first gear (101), the second gear (103) and the plain bearing (107a, 107b), the filtered signal and/or the frequency spectrum and/or the order spectrum of the filtered signal is determined by simulation; wherein
the model replicates the operating state of the plain bearing (107a, 107b).

5. Method according to the preceding claim; **characterized in that**
the simulation is carried out iteratively over a number of operating states of the plain bearing (107a, 107b).

6. Method according to Claim 4 or 5; **characterized in that**
the variables determined by simulation are in each case compared with a corresponding variable determined by measurement.

7. Arrangement with at least one plain bearing (107a, 107b), a first gear (101), a second gear (103), a sensor (109) and an evaluation unit (111); wherein
the first gear (101) is mounted by means of the plain bearing (107a, 107b) and meshes with the second gear (103); and wherein
the sensor (109) is designed to measure structure-borne sound from a tooth engagement of the first gear (101) and the second gear (103); **characterized in that** the evaluation unit (111) is designed to perform a method according to one of the preceding claims.

## Revendications

1. Procédé de détermination d'un état de fonctionnement d'au moins un palier lisse (107a, 107b) ;
une première roue dentée (101) étant montée rotative au moyen du palier lisse (107a, 107b) et s'engrenant avec une deuxième roue dentée (103) ; et
un bruit de structure provenant d'une engrenure de la première roue dentée (101) et de la deuxième roue dentée (103) étant mesuré au moyen d'un capteur (109) ;
l'état de fonctionnement du palier lisse (107a, 107b) étant évalué à l'aide du bruit de structure mesuré au moyen du capteur (109) provenant de l'engrenure de la première roue dentée (101) et de la deuxième roue dentée (103),
**caractérisé en ce que**
le signal est filtré ;
le signal filtré correspondant à un signal du bruit de structure provenant de l'engrenure.

2. Procédé selon la revendication 1, **caractérisé en ce qu'**un spectre de fréquence et/ou d'ordre du signal filtré est calculé.

3. Procédé selon l'une des revendications précédentes, **caractérisé en ce qu'**une vitesse de rotation de la première roue dentée (101) et/ou une température du palier lisse (107a, 107b) et/ou un couple auquel est soumise la première roue dentée (101) sont acquis.

4. Procédé selon l'une des revendications précédentes, **caractérisé en ce que** le signal filtré et/ou le spectre de fréquence et/ou d'ordre du signal filtré sont déterminés par simulation en utilisant un modèle de la première roue dentée (101), de la deuxième roue dentée (103) et du palier lisse (107a, 107b) ;
le modèle représentant l'état de fonctionnement du palier lisse (107a, 107b).

5. Procédé selon la revendication précédente, **caractérisé en ce que** la simulation est effectuée de manière itérative sur plusieurs états de fonctionnement du palier lisse (107a, 107b).

6. Procédé selon la revendication 4 ou 5, **caractérisé en ce que** les grandeurs déterminées par la simulation sont respectivement comparées à une grandeur correspondante déterminée par mesure.

7. Arrangement comprenant au moins un palier lisse (107a, 107b), une première roue dentée (101), une deuxième roue dentée (103), un capteur (109) et une unité d'interprétation (111) ;
la première roue dentée (101) étant montée au moyen du palier lisse (107a, 107b) et s'engrenant avec la deuxième roue dentée (103) ; et
le capteur (109) étant configuré pour mesurer un bruit de structure provenant d'une engrenure de la première roue dentée (101) et de la deuxième roue dentée (103) ; **caractérisé en ce que** l'unité d'interprétation (111) est configurée pour mettre en œuvre un procédé selon l'une des revendications précédentes.
